# EUROPEAN PATENT APPLICATION

(11) **EP 2 105 045 A1**
(43) Date of publication of application: **30.09.2009**
(21) Application number: 08153535.3
(22) Date of filing: 28.03.2008
(51) Int. Cl.: A01C 1/06, A61K 9/48

(54) **A device for encapsulating seeds and a method**

(71) Applicant: ADP International B.V., 3553 EE Utrecht (NL)
(72) Inventor: van Asbrouck, Johan, 66000 Phichit (TH)
(74) Representative: Hatzmann, Martin

(57) **Abstract**

The invention relates to a device for encapsulating seeds. The device comprises a transport unit provided with a sequence of supports positioned along a transport path. Each support is arranged for supporting a multiple number of capsules at predefined locations and the transport unit is arranged for intermittently transporting the supports in a transport direction along the transport path to a loading position, respectively. The device further comprises a filling unit provided with a multiple number of seed releasing modules for, in a loading position of a support, substantially simultaneously releasing seeds above corresponding capsule locations on a particular support.

## Description

The invention relates to a device for encapsulating seeds.

In the process of treating seeds for sowing in the earth, it is known to perform a so-called pelletization process wherein individual seeds are enrobed or coated with material for the purpose of rendering them mechanically more robust and more spherical-shaped and/or for chemically/biologically improving the germinating and growing process of the seeds, e.g. by adding seed protecting agents.

However, due to macroscopic and chaotic behaviour of the seeds being treated, the pelletization process does not provide a similar result for all treated seeds, i.e. the quantity of material with which the seeds are coated varies from seed to seed which is not desired from an agricultural point of view. Further, the coated seeds substantially vary in shape and size thereby enlarging a risk of damaging seeds during handling thereof. In addition, for performing the pelletization process substantial amounts of water are required, thereby rendering the process more and more expensive and consuming natural resources. As the coated seeds are hydrophilic, particular care is required regarding storage conditions of the seeds, especially to counteract disintegration of the seeds and/or the damage by micro-organisms.

It is an object of the invention to provide a device for preparing seeds, wherein at least one of the disadvantages identified above is reduced. In particular, the invention aims at obtaining a device for preparing seeds wherein the resulting seeds have a more uniform shape and size. Thereto, according to an aspect of the invention, the invention provides a device for encapsulating seeds. The device comprises a transport unit provided with a sequence of supports positioned along a transport path, each support being arranged for supporting a multiple number of capsules at predefined locations, the transport unit being arranged for intermittently transporting the supports in a transport direction along the transport path to a loading position, respectively, wherein the device further comprises a filling unit provided with a multiple number of seed releasing modules for, in a loading position of a support, substantially simultaneously releasing seeds above corresponding capsule locations on a particular support.

By intermittently transporting the supports in the transport direction along the transport path to a loading position and by substantially simultaneously releasing seeds above corresponding capsule locations, a seed encapsulating device is obtained wherein capsules are filled with optionally treated seeds. Since capsules having substantially equal shape and size can be used, also the optionally treated seeds being encapsulated in the corresponding capsules have advantageously a uniform exterior shape and dimensions.

By using a device according to the invention, multiple capsules positioned on a single support can receive a seed, respectively, substantially simultaneously, so that in a single step a set of multiple capsules can be filled. By transporting the next support to the loading position, a next set of multiple capsules can be filled. As a consequence, the structure of the seed encapsulating device allows a relatively high filling rate. As an example, by operating the transport unit at an intermittence cycle of one second and by implementing thousand capsule locations on a single support, a capacity of 3.6 million capsules per hour can be obtained. Such a million capsule capacity might meet agricultural seed quantity needs.

Further, in the process of filling capsules with seeds, no liquid or water has to be added, thereby saving natural sources en rendering the use of a seed encapsulating device according to the invention potentially cheap. Also the chance that the seeds disintegrate and/or bacterial organisms become active is reduced.

It is noted that devices for filling capsules are known in the pharmaceutical field. Such a capsule filling device generally comprises a platform that can be swivelled with respect to a central vertical axis for aligning subsequent angular sections of the platform just below a device that periodically drops a predefined amount of pharmaceutical material into an open capsule positioned at said angular section of the platform. After closing the filled capsules, a packaging step is performed for preparing the capsules for logistical processing. The capacity of such a device for filling capsules ranges from approximately 100 capsules per hour to approximately 20.000 capsules per hour which is acceptable for meeting capacity requirements in the pharmaceutical field.

In a preferred embodiment according to the invention, the device further comprises a multiple number of filling units for substantially simultaneously releasing material above corresponding capsule locations on at least two supports. By substantially simultaneously releasing material above capsule locations at a multiple number of supports, the capsules can be filled, apart from the seed, with additional material, such as powder, liquid, micro capsules, etc, without deteriorating the throughput of the device. As such, in a sequence of loading positions of a support, the corresponding capsules can receive, in predetermined order, the seed and additional material. In principle, however, the device can also be provided with a single filling unit, e.g. if the capsules are arranged for being filled merely with seeds.

Other advantageous embodiments according to the invention are described in the following claims.

The invention relates also to a method of encapsulating seeds.

By way of example only, embodiments of the present invention will now be described with reference to the accompanying figures in which
Fig. 1 shows a schematic perspective view of a device according to the invention;
Fig. 2 shows a schematic top view of the transport unit of the device shown in Figure 1;
Fig. 3 shows a schematic side view of the device shown in Figure 1; and
Fig. 4 shows a schematic side view of a further embodiment of the device according to the invention.

The figures are merely schematic views of preferred embodiments according to the invention.

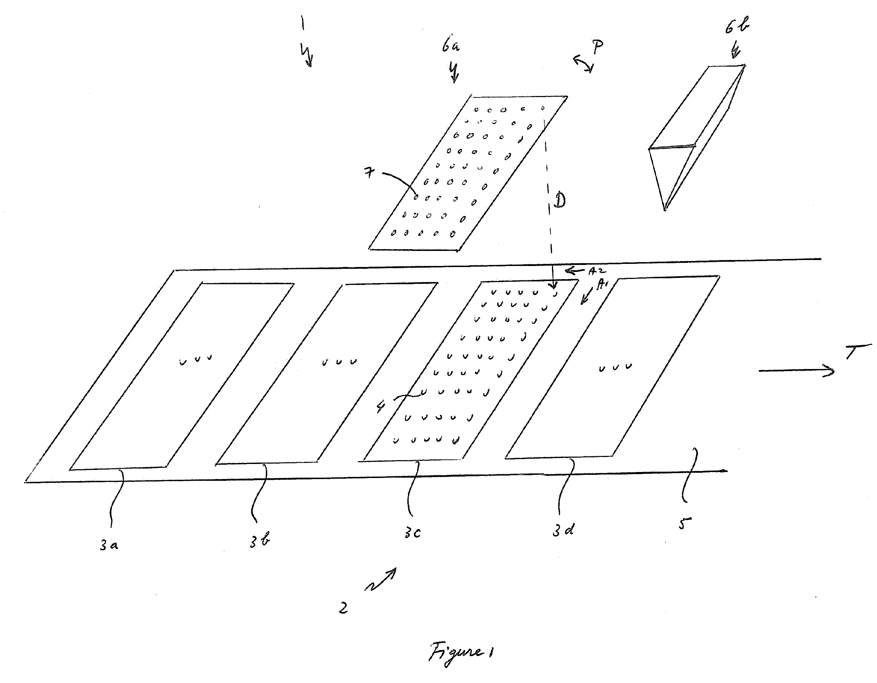

Figure 1 shows a schematic perspective view of device 1 for encapsulating seeds according to the invention. The device 1 comprises a transport unit 2 and two filling units 6a, 6b.

The transport unit 2 is provided with a sequence of supports 3a-3d that are positioned along a transport path 5. The supports 3a-3d are arranged for supporting a multiple number of capsules 4 at predefined locations. Thereto, the supports 3a-3d comprise a tray (not shown) for receiving the capsules 4. However, also other techniques can be used for supporting the capsules 4 at the predefined locations, e.g. by using a grid. During operation of the device 1, the transport unit 2 intermittently transports the supports 3a-3d in a transport direction T along the transport path 5 to a loading position, respectively.

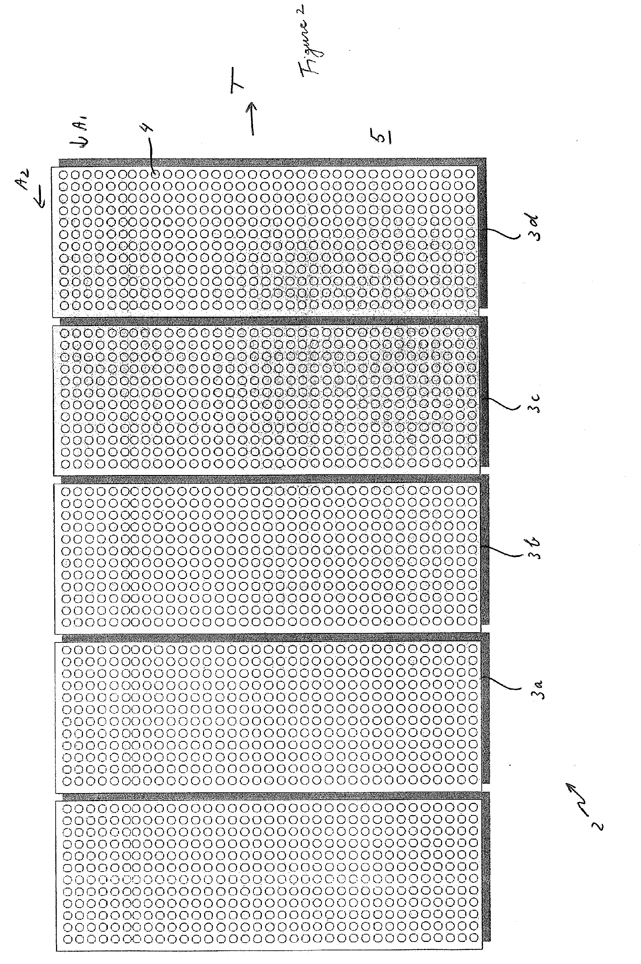

Figure 2 shows a schematic top view of the transport unit 2 of the device 1 for encapsulating seeds according to the invention.

The filling units 6a, 6b of the device 1 are each provided with a multiple number of material releasing modules 7 for, in a loading position of a support 3a-3d, substantially simultaneously releasing seeds or other material above corresponding capsule locations on a particular support 3a-3d. In the embodiment shown in Figure 1, a first filling unit 6a comprises a plate having a number of cavities for receiving material. In each cavity a nozzle is arranged for pneumatically keeping material in the cavity. The cavity and the nozzle form the material releasing module 7.

By striking a material hopper filled with the material along the plate being oriented in a substantial vertical direction and by applying an under pressure at the nozzles, the material will be sucked to the cavities. Material between the cavities is then removed, e.g. by means of a wiping movement. Then, the plate is pivoting from a substantial vertical orientation in a pivoting direction P towards a substantial horizontal direction wherein the cavities 7a are positioned just above the capsules 4 at the corresponding locations on the support in the 3c in the loading position. By removing the underpressure, the material is released from the cavities, so that the material drops by gravity along a gravity drop direction D into the capsules 4.

During transport of the supports 3a-3d in the transport direction T, a particular support 3c is positioned in a first loading position below a first filling unit 6a for receiving a first material in capsules 4 positioned on the support. After one transport cycle, said support 3c is positioned in a second loading position below a second filling unit 6b where in Figure 1 the previous support 3d is depicted, for receiving a second material in the capsules 4 positioned on the support. In order to render explicit that different filling unit types can be used, the construction of the second filling unit 6b differs from the first filling unit 6a.The first and second material can be different or can be similar. As an example, the first material is formed by seeds, such that in each capsule 4 one seed is dropped, while the second material is composed of a vitamin. More generally, the material released by a releasing module 7 might comprise one or more seeds or seed related material as described below, and in addition to that biological and/or chemical supplements such as agricultural or horticultural compounds, micro organisms, biological control agents such as bacterial or fungus, nutrients, optionally in the form of manure, etc. Chemical supplements might comprise pharmaceutical compounds, vitamins, powders, liquids, micro capsules, fertilizer, etc.

In this context it is noted that the term 'seed' is to be understood as including seed related material, and materials comprising seed material, such as fruits or nuts. Also the seed may be a treated seed, such as a pelleted seed comprising a seed coating. The term "seed" also covers other forms of plant propagation material, such as roots, shoots, tubers, bulbs, callus, nuts, fruits, embryos, plant tissue, and plant cells.

It is further noted that the device according to the invention might also be provided with three or more filling units for substantially simultaneously releasing material above corresponding capsule locations on the corresponding supports. By providing the material substantially simultaneously in the capsules of a particular support, in a parallel manner, a relatively high throughput can be obtained.

It is also noted that the device according to the invention can also be provided with a single filling unit for substantially simultaneously releasing material above corresponding capsule locations on the corresponding support. The filling unit is therefore arranged for releasing seeds. However, the filling unit can also be arranged for releasing other materials, as described above. As a consequence, according to an aspect of the invention, a device is disclosed for encapsulating seeds, comprising a transport unit provided with a sequence of supports positioned along a transport path, each support being arranged for supporting a multiple number of capsules at predefined locations, the transport unit being arranged for intermittently transporting the supports in a transport direction along the transport path to a loading position, respectively, the device further comprising a filling unit provided with a multiple number of material releasing modules for, in a loading position of a support, substantially simultaneously releasing material above corresponding capsule locations on a particular support.

By using the device according to the invention, seeds can be adapted for improving seed conditions.

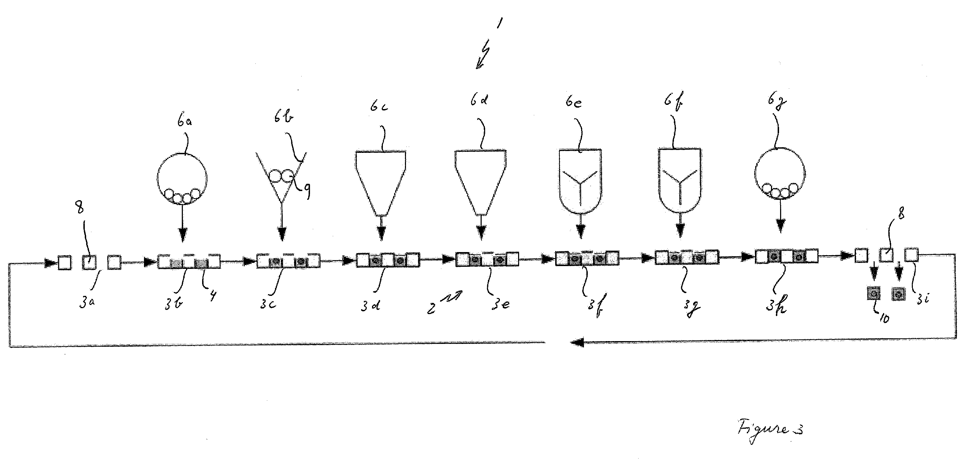

Figure 3 shows a schematic side view of the device 1. According to an aspect of the invention, a method of encapsulating capsules 4 comprises the steps of providing a sequence of supports 3a-3h positioned along a transport path 5, providing a multiple number of capsules 4 at predefined locations on a support 3b, intermittently transporting the supports 3a-3h in a transport direction T along the transport path 5 to a loading position, respectively, and, in a loading position of a support 3c-3g, substantially simultaneously releasing seeds or other material above corresponding capsule locations. When a multiple number of filling units 6b-6f is employed, the process may comprise a step of arranging capsule bottom parts on a support 3b, as described above, dropping one or more materials in the capsule 4 by means of one or more filling units, dropping a seed in the capsule by a filling unit 6b, dropping one or more materials in the capsule by means of one or more further filling units 6c, and closing each capsule on the support 3h with a corresponding capsule top element. Then, the capsules can be taken away from the support 3h. Alternatively, a multiple number of seeds is inserted in a single capsule. Optionally, also a RF tag is added to the capsule for identification purposes.

In the embodiment of the device shown in Figure 3, the capsule bottom parts are disposed on a tray 8 by means of a capsule bottom part provider 6a. Then, seeds 9 are brought into the capsules 4 by a seed filling unit 6b. By means of the further material filling units 6c-6f other materials are supplemented to the capsules 4, such as chemical material, bacteria, liquid and/or powder material. At a further stage, the capsules on a support 3h are closed by a capsule closing module 6g. Then, the filled and closed capsules 10 are removed from the support 3i. The transport unit 2 comprises a multiple number of supports arranged on an endless transport belt, so that the process can continue. It is noted that the supports can also be arranged otherwise, e.g. on a transport element having a limited length.

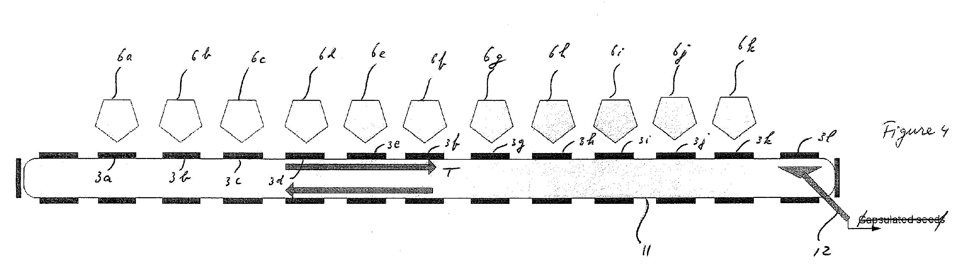

Figure 4 shows a schematic side view of a further embodiment of the device 1 according to the invention. Here, the endless transport belt 11 is explicitly shown. Further, between the capsule bottom part provider 6a and the capsule closing module 6k, a multiple number of filling units 6b-6j are provided for filling the capsules with a wide variety of materials. It is noted that the number of material releasing modules can be chosen otherwise, e.g. more than 9 modules, such as 10-12, or less than 9 modules, such as e.g. 7 modules. Further, the device 1 is provided with a capsule guiding system 12 for collecting the filled capsules 10.

As shown in Figure 1, the multiple number of material releasing modules 7 is arranged as a two-dimensional array in mutually transverse directions A1, A2. However, the modules 7 can also be arranged otherwise, e.g. as a linear or curved one-dimensional array. In a preferred embodiment, the area of the plate and the corresponding support 3 is optimally occupied by material releasing modules and capsules, respectively, thereby increasing the capacity of the device 1.

The encapsulated seeds obtained by the device 1 according to the invention are suitable for a variety of purposes, e.g. in the field of agricultural or horticultural applications. The encapsulated seedsallow ideal storage and protection in readiness for the appropriate sowing period using seeding machinery and in readiness for germination.

The capsule material from which the casules are prepared preferably comprises biologically degradable polymers e.g. lactic acid and applied by e.g. injection moulding, deep draw, sheath application or a combination of these methods in one or more layers. The capsule can be made of a mixture or compound that is permeable to water and/or air but is impermeable to soil, soil organisms, including microbes and their survival stages. The capsule may then last until the seed has germinated and the developing plant has reached the seedling stage. The capsule might optionally incorporate hygroscopic agents e.g. silica gel, clay and calcium chloride.

The capsule as used in aspects of the present invention may function as a seed coating, for instance, the capsule material may comprise a matrix polymer as a binder, loaded or coated with conventional seed coating agents, such as insecticides, herbicides, fungicides, and other beneficial chemicals. In addition to the seed, the capsules comprising the seed may optionally comprise additional substances, in dry, semi-dry or liquid form, such as growth promoting substances.

It is noted that the material releasing module can also be implemented otherwise, e.g. using a valve system, an oscillating plate system, a needle system and/or a vacuum system. Such systems are e.g. known from the field of seeders, i.e. devices that are arranged for implanting seeds in earth beds. According to the invention, the mechanisms that are implemented in seeders, such as nozzle seeders, dust type seeders, drum seeders, mechanical plate seeders, dibbling units,

It will be understood that many variants are possible.

As an example, the device according to the invention might comprise different types of material releasing modules.

Other such variants will be obvious for the person skilled in the art and are considered to lie within the scope of the invention as formulated in the following claims.

## Claims

1. A device for encapsulating seeds, comprising a transport unit provided with a sequence of supports positioned along a transport path, each support being arranged for supporting a multiple number of capsules at predefined locations, the transport unit being arranged for intermittently transporting the supports in a transport direction along the transport path to a loading position, respectively, the device further comprising a filling unit provided with a multiple number of seed releasing modules for, in a loading position of a support, substantially simultaneously releasing seeds above corresponding capsule locations on a particular support.

2. A device according to claim 1, wherein the multiple number of seed releasing modules is arranged as a one-dimensional or two-dimensional array.

3. A device according to claim 1 or 2, further comprising a multiple number of filling units for substantially simultaneously releasing material above predefined capsule locations on at least two supports.

4. A device according to any of the previous claims, wherein a seed and/or material releasing module comprises a pneumatic release system, a valve system, an oscillating plate system and/or a needle system.

5. A device according to any of the previous claims, wherein a support comprises a tray for supporting capsules at the predefined locations.

6. A method of encapsulating seeds, comprising the steps of
- providing a sequence of supports positioned along a transport path;
- providing a multiple number of capsules at predefined locations on a support;
- intermittently transporting the supports in a transport direction along the transport path to a loading position, respectively; and
- in a loading position of a support, substantially simultaneously releasing seeds above corresponding capsule locations.
